# EUROPEAN PATENT APPLICATION

(11) **EP 1 437 331 A1**
(43) Date of publication of application: **14.07.2004**
(21) Application number: 02797892.3
(22) Date of filing: 09.09.2002
(51) Int. Cl.: C04B 33/13, C04B 35/00

(54) **SLURRY-CASTING PRODUCTS WITH THREE-DIMENSIONAL COLOUR PATTERNED WITH WELL-PROPORTIONED GRANULE AND COLOURS IN THE MASS**

(30) Priority: 10.09.2001 CN 01127839
(71) Applicant: Yang, Dening, Shenzhen, Guangdong 518053 (CN)
(72) Inventor: Yang, Dening, Shenzhen, Guangdong 518053 (CN)
(74) Representative: Jackson, Derek Charles
(86) International application number: PCT/CN2002/000633
(87) International publication number: WO 2003/022777

(57) **Abstract**

This invention relates to a slurry-casting products with three-dimensional color patterned in well-proportioned granule and colors in the ceramic base mass, and the products of ceramic for daily uses, sanitary equipments and articles, the base mass of that include 1 or 1-50 variety of colored granules which shaped in roundness, squareness-rhombus or oblong -rhombus with diameter of 0.2mm-40mm, the granules partition in diameter of the proportions in the whole mass, in which the granules that diameter of 0.2mm-1.5mm with proportions of 10%-70%, 1.5mm-40mm with proportions of 10%-70%in the whole mass, and the other are the sinters of powder which diameters in 0.2mm-0.01mm. The invention can presenting granule patterns of granite with a large area or about 100%, in three-dimensional solid mass and in decorative formed in ceramic granite patterns, used for the slurry-casting products of ceramic for daily uses, sanitary equipments and articles, and can present three-dimensional patterns for complex shape, and good for mass production, value in use of industry.

## Description

### Technical sphere

The invention relates to a three-dimensional patterned slurry ceramic product in ceramic fields. especially means to the slurry-casting product with three-dimensional color patterned with well-proportioned granule and colors in the mass with the characteristics of three-dimensional ceramic granite pattern formations. It adopts the characteristics of pattern formation with three-dimensional ceramic granite, uses slurry-casting of extracted mould technology to produce daily use ceramics, sanitary ceramics and handicraft porcelain products, such as washing basins, stools, urinals and high-class daily ceramics, like table wares, tea sets, wine pots and cups, bottles, jars and other handcraft articles made of slurry-casting in novel decorative structure. It is a rather practical and progressive new design suitable for wide promotion and application in the industry.

### Background of technology

The present ceramic products of slurry-casting technology with extracted moulds can be mainly divided described into the following types:

The first type belongs to white ceramic stock structure sanitary wares and daily use ceramics, like washing basins, stools, table wares, tea sets, etc., the surfaces of which are decorated with glaze in single color, such as red, blue, green, white, grey, cream yellow and so on. Its weakness lies in its mono-colored result. For instance the single colored washing basin cannot match with the table made of high-class marble or granite and fails to enable washing and dressing table in the washing room to appear with better decorative result.

The second type is mono and plain colored sanitary wares and daily use ceramic products with patterned technology. It can only encircle the products with some golden or other color pattern laces, but cannot lay in large scale pattern design under three-dimensional structure, so its structure is very monotonous. If it is used in washing room with the floor or wall paved with high-class marble or granite, it cannot match well, thus affecting the exterior decorative result.

The third type refers to the present table wares, tea sets, and other ceramic products with screen printing technology. Although it can form different designs, the present processing technology can only make normally colorful printing on plane surface. Some screen printing technology can only be applied in the production of small daily use articles, such as design printing along the cup ring. It has weakness of narrow application range and there is not any technique or product of wide screen printing in three-dimensional area.

The fourth is the technology of three-dimensional ceramic granite and marble fabrication made public by me, the inventor, after applying for the patent. Its main technology is: to make mould and mould opening in conformity with the required pattern. The mould opening is linked to the container holding raw materials in different colors of the product. This kind of mould is the kernel of the technology. However due to the over simple structure at the rear of mould, the container of raw materials at the rear of mould might become very big and exist the apparent shortcoming of insufficient space for the demand of delicate and complicated color design, if complicated multi-color pattern of over several hundreds of color zones is produced. Especially it cannot accomplish the production technology of complicated three-dimensional colorful patterned for sanitary wares, etc., and lacks practical application.

The fifth type is the sanitary wares or daily use ceramics spray printed with patterns which are rather coarse and leave uneven surfaces on the product at places of multi color overlapping. If too little print is sprayed, there might exist unprinted spots. Besides this technology cannot create integrated color result in large area for surface decoration of specially shaped ceramic products, so it is not practical in use.

The sixth type refers to ceramic product with color stripes and its production method as well as the colorful and high temperature glazed sanitary ceramic product and its production method. The product pattern is in lines. It is to inject, during processing in common, pulps of different colors simultaneously into the mould through a hole, so the product pattern gradually expands in shape from line into radiation starting from the pulp injection point. The pattern develops gradually from very thin thread at the pulp injection point into the sealed part of the mould and then scatters, so the product's lines are connected together until the sealed block. However this restricts the structure characteristic of the above-mentioned present two technologies. it is open to the public in the stripe color of ceramic products and its production method with different technologies by using pressure, speed and time differences, but the part of colored pulp is connected together from the beginning to the end mainly due to the incapability at present to break away from the traditional pulp injection technological concept of different colors from the injection hole for production of all sorts of slurry handcraft, like daily use ceramics, sanitary ware, handcraft ceramics, etc. All the present products made from multi colored slurry technology can neither be really processed technologically into the spot and mass result of marble and granite characteristic, nor can the stone patterns be made at will on the products. So no present technology can truly produce slurry handcraft ceramic products in resemblance with natural marble and granite. This is the fundamental reason why the production technology of daily use ceramics, sanitary wares and handcraft ceramics of colorful mass slurry cannot be converted from theory into competitive force in the ceramic industry. So there is almost no such kind of product. Though the present technology is modified in the technical information and promotion documents to be able to provide products with natural patterns like the designs of mountain and water, wood, snakes, waves, stone steps, landscape paintings, stone tablets, clouds, etc., they are only abstract modifications, for it is impossible to give proper control to pattern production and it can not produce new products under proper control with real marble and granite patterns which are obvious, definable, explainable and have substantial structural features.

The seventh type is the patent invention from me that has already been applied for patent and open to public under the patent No. 98122219.6 entitled "Slurry-casting products with three-dimensional color patterned with well-proportioned granule and colors in the mass and its production technology". Although it can provide the user with a progressive product and production technology suitable for application in ceramic slurry production, it is found in practical use to have some defects in its structure making it unable to achieve the best result in practical application. Its defects are: It sets granular diameter restriction in the whole mass structure as above 1.5mm resulting in imperfect technology in manufacturing large size or complicated products. When water or pulp is poured into the mould fully filled with dried granules in diameter from 1.5mm to 60-80mm, the granules are compacted towards the inside of the product mould by infilling water or pulp pressure because of pretty loose structure with too much spaces, resulting in many parts adjacent to water or pulp injection without colorful granules. This leads to the flaw of product and makes it difficult for processing, so it should be solved.

In conclusion of the above-mentioned, due to several defects in the present technology and restriction in processing technology for products with complicated geometric structure, it is impossible to make three-dimensional patterned slurry products for sanitary wares, daily use ceramics products and handcraft ceramic articles on the basis of the present extraction moulds. It shows that the above handcraft ceramic slurry articles still have a few defects and need improvements.

To eliminate the defects, manufacturers involved have gone all out to seek for the solution. An accomplished and applicable design will become an all-important issue to be solved.

In view of the foresaid defects, the inventor, making good use of his practical experience in the product design as well as manufacturing and professional knowledge, has been trying to create a new type of slurry-casting product of three-dimensional color patterned with well-proportioned granule and colors in the mass in order to improve structure of handcraft ceramic slurry products now available in the market. Through unceasing research and repeated sample verification and improvement, the inventor eventually presented the invention with practical value.

### Description of the invention

The main purpose of the invention is to solve the defects existing in the present handcraft ceramic slurry products, and provide a slurry-casting product of three-dimensional color patterned with well-proportioned granule and colors in the mass with novel structure. The key technical problem to solve is to let granular granite pattern appear in large scale or in 100% completion on the three-dimensional mass as well as the decorative surface and to form ceramic granite structure pattern for wide application in slurry products like daily use ceramics, sanitary wares, handcraft ceramic articles, etc. It is aimed at manufacturing practical slurry products out of the ones with complicated geometric drawings.

One of the subordinate purpose of the invention is to solve the defects existing in the present handcraft slurry ceramic products and provide a slurry-casting product with three-dimensional color patterned with well-proportioned granule and colors in the mass. The key technical problem to solve is to bring a fundamental transformation to the slurry production technology and form inside as well as on the surface of the mass the exquisite structure similar to the solid sculpture work of art carved from the whole piece of natural marble, granite, jade or other stone materials and processed with complicated technologies, like polishing, the carved three-dimensional stone surface.

Another purpose of the invention is to solve the defects existing in the present slurry technology and provide a slurry-casting product with three-dimensional color patterned with well-proportioned granule and colors in the mass. The key technical problem to solve is to form for the products, like delicate and small daily use wares including table wares, tea sets, wine pots and cups, with several colorful transparent or semi-transparent granules, because of addition of animal bone dust or its substitute and other supplementary technology. Then the slurry daily wares will change fundamentally in structure, quality and result into the palace works of art in resemblance with the ones meticulously carved, abraded and polished from jade, so as to possess feasible technological base and structure to execute more freely the controlled manufacturing of artistic ceramic wares.

The purpose of the invention and major technical issue to be solved will be accomplished through following technical proposal. This invention brings up a slurry casting product of three-dimensional color patterned with well-proportioned granule and colors in the mass, it includes daily use ceramics, sanitary ceramics and handicraft ceramic articles produced with the technology of slurry-casting or gypsum mould. inside its mass are 50 to 100 millions grains of 1 or 1-50 sorts of colors in diameter of 0.2mm-40mm. The grains are spherical, square with multi rhombuses and rectangular with multi rhombuses of following features: Divided according to the ratio of granules of various diameters in the total volume of granules, granules with the minimum diameter of 0.2mm-1.5mm take up an ratio of 10%-70%, granules with the minimum diameter of 1.5mm-40mm occupy an ratio of 10%-95% while the remaining is sintered powder with diameter of 0.2mm-0.01mm.

The purpose of the invention and major technical issue to be solved may be further accomplished through following technical proposal.

In the foresaid slurry-casting products with three-dimensional color patterned with well-proportioned granule and colors in the mass, in the existence of atotal of 50-100 million granules of 2 or 2-50 colors in minimum diameter of 1mm-40mm in base mass.

In addition, in the mentioned product which is shaped in slurry-casting or gypsum mould and fabricated by two or more demoulding processes from different directions.

Besides, in the smooth and bright structure of the mentioned mass surface same as the decorative surface of slurry-casting technology and gypsum mould.

The mentioned mass surface has a layer of transparent glaze.

In the foresaid slurry-casting products with three-dimensional color patterned with well-proportionecl granule and colors in the mass, in 1―10000 masses of bleeding patterned structure in 1 or 1―3 colors of under the transparent glazed surface.

In the foresaid slurry-casting products with three-dimensional color patterned with well-proportioned granule and colors in the mass, in 1―10000 masses of colorful glazed patterns of 1 or 1-10 colors in spraying or calico printing.

In the foresaid slurry-casting products with three-dimensional color patterned with well-proportioned granule and colors in the mass, in achromatic transparent glass granule, colored transparent glass granule, semi transparent glass granule or high dioptric glass granule in the mass.

In the foresaid slurry-casting products with three-dimensional color patterned with well-proportioned granule and colors in the mass, in animal bone dust or any other ingredient as its substitute in the mass which enables to turn the whole mass into a semi transparent jade appearance.

In the foresaid slurry-casting products with three-dimensional color patterned with well-proportioned granule and colors in the mass, in the formation of mass by granules mixtures of 2- 100 different colors in red, yellow, blue, white, black, green, grey, purple, brown or orange or mixture of colorful granules in identical colors but of different color degrees.

The invention has distinctive advantages and beneficial results in comparison with the present technology. It is known from the above technical plan as well as the best method of invention, no defects existing with the present slurry products have ever been found in the application of invention. Besides it can make the structure of invention more steady and changeable, reaching a certain practical extent and possessing the value of wide application in the industry. The advantages of invention are further illustrated in detail as follows:
1. The invention of slurry-casting products of three-dimensional color patterned with well-proportioned granule and colors in the mass has in its mass in total 50-100 million granules of 1 or 1-50 colors in diameter of 0.2mm-40mm shaped in spherical or square with multi rhombuses or rectangular with multi rhombuses. The main improvements in structure are: Divided according to the ratio of granules with different diameters in the total mass, the granules with the minimum diameter of 0.2mm-1.5mm occupy 10%-70%, granules with the minimum diameter of 1.5mm-40mm take up 10%-95%, while the rest are sintered bodies in diameter of 0.2mm-0.01mm.
   With the above structure, the invention can solve the defects, existing with the present ceramic products, of imperfect technology and difficult processing in manufacturing products with bulky sizes and complicated shapes. Its minimum restricted diameter for granule formation is 1.5mm-40mm. By eliminating big granules in diameter of 40mm-80mm, it reduces the spaces created by too big granules while dry filaments are filled in. Small granules at diameter of 0.2mm-1.5mm and powder with diameter of 0.2mm-0.01mm are used to stuff the spaces created by big granules as the small ones arc filled into the mould, making it operational for massive production and assuring quite high rate of product qualification. One the other hand they can make appropriate and even distribution of small and big granules on the surfaces and in three-dimensional structure of the product, similar to granule distribution in natural granite. This creates better result of stone patterns.
2. The invention can create in three-dimensional mass and on decorative surface large scale or 100% complete granule pattern of granite and form ceramic granite pattern structure for wide application in slurry products for daily use wares, sanitary wares and handcraft ceramic articles. It can even produce practical slurry products with three-dimensional patterns from complicated geometric shaped products.
3. The invention brings fundamental transformation towards slurry production technology, forming inside as well as on the surface of the mass exquisite structure similar to the three-dimensional sculpture works of art carved from the whole piece of natural marble, granite, jade or other stone materials and processed it with complicated technologies, like polishing, into carved multi dimensional stone surface.
4. The invention is used in delicate and small daily use wares, like table wares, tea sets, wine pots and cups, with several colorful transparent and semi-transparent granules, because of addition of animal bone dust or its substitution and other supplementary technology. Then the slurry daily wares will change fundamentally in structure, quality, and result into the palace works of art in resemblance with the ones meticulously carved, abraded and polished from jade, so as to possess feasible technological base and structure to execute more freely the controlled manufacturing of artistic ceramic wares.
5. The sanitary wares, daily use wares, handcraft ceramic articles and other products made with this invention can form the exquisite structure similar to the solid sculpture works of art carved from the whole piece of natural marble, granite, jade or other stone materials and processed with complicated technologies, like polishing, the carved multi dimensional stone surface. They are very suitable for practical use.
6. The products of invention can be inlaid into the washing basin table made of natural granite of same color and pattern in the washing room to form an integral part, greatly enhance its integrity and is extremely resplendent. Other products of invention as stools, etc., can be as exquisite as the solid sculpture work of art carved from the whole piece of natural granite and processed with complicated technologies, like polishing, the carved multi-dimensional surface. When they are placed against the wall and floor decorated with natural granite or marble of same color and pattern, the whole washing room turns to be as beautiful and elegant as art palace. Taking for another example products made with this invention such as bowls, dishes, cups, disks, etc., in table wares and tea sets appear as beautiful and elegant as the work of arts meticulously carved and polished from natural stones, including jade, and can achieve better decorative result. It greatly increases the added value of products, complies better with the users' requirements for slurry ceramic products and improves the integral benefits by a big margin.
7. The invention definitely meets with the industrial demand in structure design, practical use and cost return and the structure it exposes is unprecedented creative design which has never appeared in any publications, and the same structure feature has never been known or used by public before the application. The similar structure design has never been published in public or used in same products. It really possesses novelty.
8. The structure of invention is naturally more progressive technically in comparison with the present slurry ceramic products and its extraordinary structure feature and function can never he compared with the present slurry ceramic products. It is more progressive technically in comparison with the present slurry ceramic products and possesses several improved functions. It is actualiy of creation.
9. The applicant is the actual developer in manufacturing the slurry ceramic products. The inventor owns several years' rich experiences and has good understanding of the problems and defects existing with the present ceramic products. Developed on the basis of the above defects, the invention not only is a creation in space structural formation, but also possesses the improved functions in comparison with the present ceramic products. It is more progressive technically and is really practical.

In conclusion, the slurry-casting products with three-dimensional color patterned with well-proportioned granule and colors in the mass of special structure for the invention possess the above advantages and practical value and the wide application value in the industry. It is more progressive in structure, function and technology and is more applicable as a new, progressive and practical design.

The detail application method and example are provided as follows together with the attached illustrations.

### Brief introduction of the attached illustrations

Illustration 1 is the plane of washing basin structure of slurry-casting products with three-dimensional color patterned with well-proportioned granule and colors in the mass of the invention.

Illustration 2 is the sectional front schematic drawing of washing basin structure of the slurry-casting products with three-dimensional color patterned with well-proportioned granule and colors in the mass of the invention.

Illustration 3 is the sectional side schematic drawing of washing basin structure of the sherry-casting products with three-dimensional color patterned with well-proportioned granule and colors in the mass of the invention.

### The best method to realize invention

Detail explanation is given below to the specific adoption method, structure, feature and function of the slurry-casting products with three-dimensional color patterned with well-proportioned granule and colors in the mass of the invention in combination with illustrations and quite good and practical examples.

Please refer to illustration 1. The black dot in the drawing means sintered light red powder mass of part 1. Circle indicates grey granule of part 2 in diameter of 0.3mm-1.5mm. Circle with slant refers to brownish red granule of part 3 in diameter of 8mm-40mm. Black oval shows purplish red granule of part 4 in diameter of 1.5mm- 10mm and part with round hole at center stands for water outlet hole of washing basin of part 6.

Please refer to illustration 2. The black dot in the drawing means sintered light red powder mass of part 1. Circle indicates grey granule of part 2 in diameter of 0.3mm-1.5mm. Circle with slant refers to brownish red granule of part 3 in diameter of 8mm-40mm. Black oval shows purplish red granule of part 4 in diameter of 1.5mm-10mm. White seam stands for transparent glaze coating of part 5 and part with round hole at center stands for water outlet hole of washing basin of part 6.

Please refer to illustration 3. The black dot in the drawing means sintered light red powder mass of part 1. Circle indicates grey granule of part 2 in diameter of 0.3mm-1.5mm. Circle with slant refers to brownish red granule of part 3 in diameter of 8mm-40mm. Black oval shows purplish red granule of part 4 in diameter of 1.5mm-10mm. White seam stands for transparent glaze coating of part 5 and part with round hole at center stands for water outlet hole of washing basin of part 6.

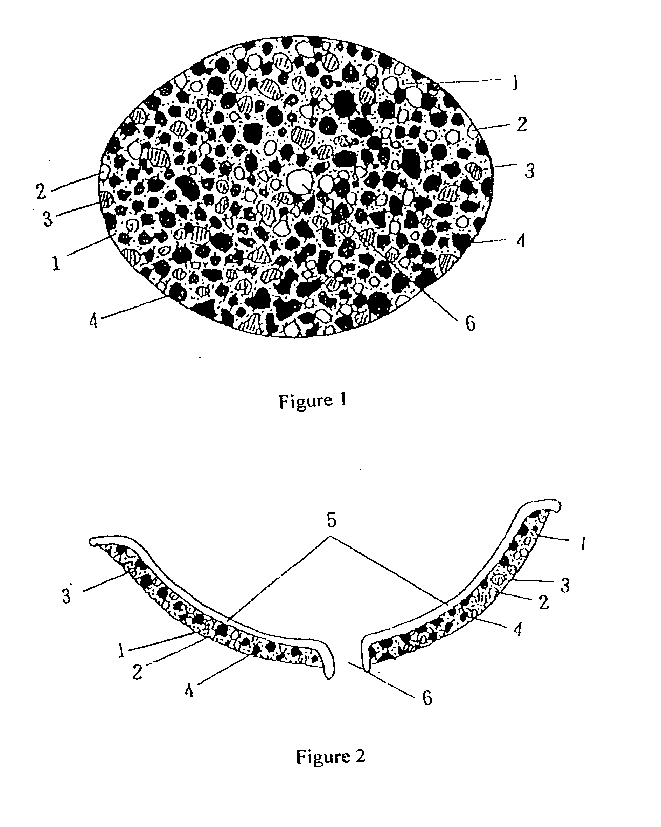

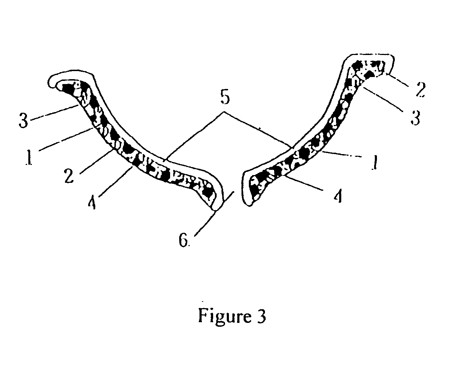

Referring to Fig.1, Fig.2 and Fig.3, The three-dimensional color patterned with well-proportioned granule and colors in the mass of the invention, it includes daily use ceramics, sanitary ceramics and handicraft ceramic articles produced with the technology of slurry-casting or gypsum mould. Inside its mass are 50 to 100 millions grains of 1 or 1-50 sorts of colors in diameter of 0.2mm-40mm. The grains are spherical, square with multi rhombuses and rectangular with multi rhombuses of following features:

Divided according to the ratio of granules of various diameters in the total volume of granules, granules with the minimum diameter of 0.2mm-1.5mm take up an ratio of 10%-70%, granules with the minimum diameter of 1.5mm-40mm occupy an ratio of 10%-95% while the remaining is sintered powder with diameter of 0.2mm-0.01mm.

To make the products under the invention, The three-dimensional color patterned with well-proportioned granule and colors in the mass, in the existence of a total of 50-100 million granules of 2 or 2-50 colors in minimum diameter of I mm-40mm in base mass.

The three-dimensional color patterned with well-proportioned granule and colors in the mass of the invention, in the mentioned product which is shaped in slurry-casting or gypsum mould and fabricated by two or more demoulding processes from different directions.

The three-dimensional color patterned with well-proportioned granule and colors in the mass of the invention, in the smooth and bright structure of the mentioned mass surface same as the decorative surface of slurry-casting technology and gypsum mould.

The three-dimensional color patterned with well-proportioned granule and colors in the mass of the invention, in a layer of transparent glaze on the mentioned mass surface.

The three-dimensional color patterned with well-proportioned granule and colors in the mass of the invention, in 1―10000 masses of bleeding patterned structure in 1 or 1-3 colors under the transparent glazed surface.

The three-dimensional color patterned with well-proportioned granule and colors in the mass of the invention, in 1―10000 masses of colorful glazed patterns of 1 or 1-10 colors in spraying or calico printing.

The three-dimensional color patterned with well-proportioned granule and colors in the mass of the invention, in achromatic transparent glass granule, colored transparent glass granule, semi transparent glass granule or high dioptric glass granule in the mass.

The three-dimensional color patterned with well-proportioned granule and colors in the mass of the invention, in animal bone dust or any other ingredient as its substitute in the mass which enables to turn the whole mass into a semi transparent jade appearance.

The three-dimensional color patterned with well-proportioned granule and colors in the mass of the invention, in the formation of mass by granules mixtures of 2-100 different colors in red, yellow, blue, white, black, green, grey, purple, brown or orange or mixture of colorful granules in identical colors but of different color degrees.

The following is the detail explanation of the production method and procedure of the slurry-casting products of three-dimensional color patterned with well-proportioned granule and colors in the mass of the invention.

The production method and processing procedure of the invention is divided into three stages, namely preparation of colorful granules, formation of semi-finished products and accomplishment after glazing and burning.

### 1. Preparation stage of colorful granules.

Step 1: First of all mix, with the preparation method well known for slurry technology by technicians in the industry, different kinds of ceramic raw materials and dyestuffs, color producing materials together into raw materials, grind and mix them, prepare, after eliminating iron, the four raw materials for slurry in the colors of red, grey, brownish red and purplish red and make them ready for use after decaying separately.
Step 2: Adopt minute granule spraying formation technology used for production of glass tiles and process them into four sorts of raw powder granules of different colors.
Step 3: Press with 3000T presser at the pressure intensity of 350-500 bar the three kinds of grey, brownish red and purplish red raw granules at the diameter of 0.6mm-0.01mm, made from spray drying technology, into blank bricks with excellent strength respectively.
Step 4: After being shredded by pulverizer, sieve the grey colored masses and retain the granules with the minimum diameter of 0.2mm-1.5mm, big purplish red masses with the minimum diameter of 1.5mm-10mm, and big brownish red masses with the minimum diameter of 8-40mm.
Step 5: Prepare 40% for big brownish red granules with the minimum diameter of 8mm-40mm, 20% for big purplish red granules with the minimum diameter of 1.5mm-10mm and 20% of big grey granules with the minimum diameter of 0.2mm- 1.5mm.
Step 6: Prepare water soluble liquid viscose, wrap the above three kinds of granules in rolling, dry them and coat them on their surfaces with a layer of water soluble viscose. Finally mix 20% of light red granules at the diameter of 0.6mm-0.01mm with the three raw granules according to the above ratio and make them ready for use.

### 2. Formation stage of blank products.

Step 1: Formation stage of blank products is also the pressing and casting stage of blank products. Mix the four granules and powder according to the ratio and make them well-distributed. Use rotation shaft pressing and casting technology to press down the plastic extraction mould for washing basin. Increase pressure gradually and keep the pressure after the mould is fully filled in.
Step 2: Fill gradually through the inlet of pressing and casting machinery the slurry with low density of light red powder into the granules inside shaping mould frame of the washing basin and make it to fill in step by step the minute spaces between all the granules. Due to high density of big granules, big and small granules are well-distributed according to various ratios, and then add pressure for slurry injection to make granules of all colors submerge gradually. The water soluble viscose on their surface will dissolve gradually to form slurry with granules.
Step 3: At this moment turn on rapidly the vacuum extraction system to draw away the water in the granule slurry of the extraction mould as well as part of viscose already dissolved in water through the plastic mould walls with many minute holes. The mass is kept under pressure and then demoulded
   Then the dried mass with tight integrity of colorful granules in high strength and smooth can be obtained.
Step 4: Glaze the product after the process of repairing, drilling, scratching and drying.

### 3. The stage of glazing and burning.

The stage of glazing and burning means the product is formed through burning procedure. Product sample at this stage appears to be similar with the structure and result of coarse natural granite in purple color, as if it is formed through burning by natural stone granules of different sizes in purplish red, brownish red, grey and light red. Its surface is smooth, bright and clean just like the coarse natural granite in purple color after carving and meticulous abrading and polishing.

During the processing of invention, single or multi mould packages can be used to accelerate the speed and modulate the density proportion of granules to be pressed and casted. Single, dual or multi shafts pressing and casting technology can be used for each mould package to increase efficiency and controllability especially for products with complicated shapes.

During the application of invention, dual burning technology can also be used to cooperate the technologies of pattern bleeding or color glazed design and transparent glaze.

It should be understood by the technical personnel in this field that they can adopt the silicate brick color blocks of different colors such as red, yellow, white, blue, black, green, orange and purple to make up the pattern and adopt the salt-penetrations of different colors such as light gray, light brown, grayish blue, yellowish red and dark green to make up the pattern.

It should also be understood by the technical personnel in the field that the forming of the above silicate brick color blocks of different colors such as red, yellow, white, blue, black, green, orange and purple can be realized by adopting or adding Fe₂O₃, Na₂O, V₂O₅, CoO, MnO₂, Cr₂O₃, CuO and the mixture of (Fe₂O₃, CoO, MnO₂, Cr₂O₃). On the other hand, the forming of light gray, light brown and blue salt-penetrations can be realized by adopting the non-silicate material dissolving in water, such as cobalt sulfate, iron chloride, chromium chloride, manganese sulfate and citric-acid manganese. In the optimum case of this invention, the material used for each silicate brick color block area does not dissolve in water, while the material for salt-penetration dissolves in water.

Thus, while the invention has been shown and described with reference to specific features, aspects and embodiments herein, it will be appreciated that the invention is susceptible of a wide variety of other embodiments, features and implementations consistent with the disclosure herein, and the invention is therefore to be broadly construed and interpreted, within the spirit and scope of the foregoing disclosure.

### Industrial application

The invention is novel in structure and can be put into massive production with equipment, while the production cost can be relatively reduced to comply with cost efficiency. Besides it is more practical in use, so it is of industrial application value and is suitable for wide promotion in the industry.

## Claims

1. As a slurry casting product of three-dimensional color patterned with well-proportioned granule and colors in the mass, it includes daily use ceramics, sanitary ceramics and handicraft ceramic articles produced with the technology of slurry-casting or gypsum mould. Inside its mass are 50 to 100 millions grains of 1 or 1-50 sorts of colors in diameter of 0.2mm-40mm. The grains are spherical, square with multi rhombuses and rectangular with multi rhombuses of following features:
Divided according to the ratio of granules of various diameters in the total volume of granules, granules with the minimum diameter of 0.2mm-1.5mm take up an ratio of 10%-70%, granules with the minimum diameter of 1.5mm-40mm occupy an ratio of 10%-95% while the remaining is sintered powder with diameter of 0.2mm-0.01mm.

2. A kind of slurry-casting products with three-dimensional color patterned with well-proportioned granule and colors in the mass in claim 1, with the features as: in the existence of a total of 50-100 million granules of 2 or 2-50 colors in minimum diameter of 1mm-40mm in base mass.

3. A kind of slurry-casting products with three-dimensional color patterned with well-proportioned granule and color in the mass in claim 1, with the features as: in the mentioned product which is shaped in slurry-casting or gypsum mould and fabricated by two or more demoulding processes from different directions.

4. A kind of slurry-casting products with three-dimensional color patterned with well-proportioned granule and colors in the mass in claim 1, with the features as: in the smooth and bright structure of the mentioned mass surface same as the decorative surface of slurry-casting technology and gypsum mould.

5. A kind of slurry-casting products with three-dimensional color patterned with well -proportioned granule and colors in the mass in claim 1, with the features as: in a layer of transparent glaze on the mentioned mass surface.

6. A kind of slurry-casting products with three-dimensional color patterned with well-proportioned granule and colors in the mass in claim 5, with the features as: in 1―10000 masses of bleeding patterned structure in 1 or 1-3 colors under the transparent glazed surface.

7. A kind of slurry-casting products with three-dimensional color patterned with well-proportioned granule and colors in the mass in claim 5, with the features as: in 1―10000 masses of colorful glazed patterns of 1 or 1-10 colors in spraying or calico printing.

8. A kind of slurry-casting products with three-dimensional color patterned with well proportioned granule and colors in the mass in any of claim 1 to 7, with the features as: in achromatic transparent glass granule, colored transparent glass granule, semi transparent glass granule or high dioptric glass granule in the mass.

9. A kind of slurry-casting products with three-dimensional color patterned with well proportioned granule and colors in the mass in any of claim 1 to 7, with the features as. in animal bone dust or any other ingredient as its substitute in the mass which enables to turn the whole mass into a semi transparent jade appearance.

10. A kind of slurry-casting products with three-dimensional color patterned with well proportioned granule and colors in the mass in any of claim 1 to 7, with the features as: in the formation of mass by granules mixtures of 2-100 different colors in red, yellow, blue, white, black, green, grey, purple, brown or orange or mixture of colorful granules in identical colors but of different color degrees.
